# EUROPEAN PATENT APPLICATION

(11) **EP 3 206 437 A1**
(43) Date of publication of application: **16.08.2017**
(21) Application number: 14905659.0
(22) Date of filing: 04.11.2014
(51) Int. Cl.: H04W 48/08, H04W 84/12

(54) **HIDDEN HOTSPOT ACCESS METHOD AND DEVICE**

(71) Applicant: Huawei Technologies Co. Ltd., Shenzhen, Guangdong 518129 (CN)
(72) Inventor: CHEN, Xi, Shenzhen Guangdong 518129 (CN)
(74) Representative: Körber, Martin Hans
(86) International application number: PCT/CN2014/090257
(87) International publication number: WO 2016/070331

(57) **Abstract**

Embodiments of the present invention provide a hidden hotspot access method and apparatus. The hidden hotspot access method in the present invention includes: receiving first current information sent by a terminal device, where the first current information includes an access point query request and current location information of the terminal device; determining, according to the first current information and at least one piece of second current information, an access point AP available to the terminal device, where the second current information includes current location information of the AP and a hidden service set identifier SSID of the AP; and sending, to the terminal device, information about the AP available to the terminal device, where the information about the available AP includes the hidden SSID of the AP. According to the embodiments of the present invention, a problem that a terminal has low WLAN access efficiency is resolved.

## Description

### TECHNICAL FIELD

Embodiments of the present invention relate to communications technologies, and in particular, to a hidden hotspot access method and apparatus.

### BACKGROUND

When accessing a wireless local area network (Wireless Local Area Networks, WLAN for short) hotspot, a terminal needs to first find an access point (Access Point, AP for short) having a signal, and then access the WLAN by using the AP.

However, when an AP is set to hide a service set identifier (Service Set Identifier, SSID for short), this type of AP cannot be found by the terminal. If the terminal needs to access the WLAN by using the AP with a hidden SSID, a user needs to manually enter the SSID to find the AP. This causes extremely low WLAN access efficiency of the terminal.

### SUMMARY

Embodiments of the present invention provide a hidden hotspot access method and apparatus, so as to resolve a problem that a terminal has extremely low WLAN access efficiency.

According to a first aspect, an embodiment of the present invention provides a hidden hotspot access method, including:
receiving first current information sent by a terminal device, where the first current information includes an access point query request and current location information of the terminal device;
determining, according to the first current information and at least one piece of second current information, an access point AP available to the terminal device, where the second current information includes current location information of the AP and a hidden service set identifier SSID of the AP; and
sending, to the terminal device, information about the AP available to the terminal device, where the information about the available AP includes the hidden SSID of the AP.

With reference to the first aspect, in a first possible implementation manner of the first aspect, the determining, according to the first current information and at least one piece of second current information, an access point AP available to the terminal device includes:
matching at least one type of information in the first current information with information that is in the at least one piece of second current information and that is corresponding to the at least one type of information; and
determining an AP corresponding to the second current information as the AP available to the terminal device, where a matching result of the AP meets a preset available condition.

With reference to the first aspect or the first possible implementation manner of the first aspect, in a second possible implementation manner of the first aspect, before the determining, according to the first current information and at least one piece of second current information, an access point AP available to the terminal device, the method further includes:
receiving the second current information sent by the AP; and
if it is determined, according to the second current information sent by the AP, that the AP is an unregistered access point, registering the AP and saving the second current information sent by the AP; or if it is determined, according to the second current information sent by the AP, that the AP is a registered access point, updating the locally saved second current information according to the second current information sent by the AP.

With reference to the second possible implementation manner of the first aspect, in a third possible implementation manner of the first aspect, the receiving the second current information sent by the AP includes:
receiving the second current information periodically sent by the AP; or receiving the second current information sent by the AP when the second current information changes; or periodically sending a second current information obtaining request to the AP, and receiving the second current information sent by the AP.

With reference to the first aspect or the first to the third possible implementation manners of the first aspect, in a fourth possible implementation manner of the first aspect, the receiving first current information sent by a terminal device includes:
receiving the first current information sent by the terminal device, and if the terminal device is an unregistered terminal device, registering the terminal device according to the first current information.

With reference to the first aspect or the first to the fourth possible implementation manners of the first aspect, in a fifth possible implementation manner of the first aspect, the current location information of the terminal device includes at least one type of the following information: Global Positioning System GPS coordinates of the terminal device, a serving cell identifier of the terminal device, an indoor/outdoor attribute of the terminal device, or a Media Access Control MAC address, an Internet Protocol IP address, and signal strength that are of an AP found by the terminal device; and the first current information further includes at least one type of the following information: radio interference information of the terminal device, temperature and humidity at a current location of the terminal device, or power supply information of the terminal device.

With reference to the first aspect or the first to the fifth possible implementation manners of the first aspect, in a sixth possible implementation manner of the first aspect, the current location information of the AP includes at least one type of the following information: GPS coordinates of the AP, a serving cell identifier of the AP, an indoor/outdoor attribute of the AP, or a MAC address, an IP address, and signal strength that are of the AP; and the second current information further includes at least one type of the following information: radio interference information of the AP, temperature and humidity at a current location of the AP, or power supply information of the AP.

According to a second aspect, an embodiment of the present invention provides a hidden hotspot access method, including:
sending, by a terminal device, first current information to a platform device, where the first current information includes an access point query request and current location information of the terminal device;
receiving information that is about at least one available access point AP and that is sent by the platform device, where the information about the available AP includes a hidden service set identifier SSID of the available AP, the information about the available AP is information about an available AP that is determined by the platform device according to the first current information and at least one piece of second current information, and the second current information includes current location information of the AP and the hidden SSID of the AP; and
accessing a wireless local area network WLAN according to the information about the at least one available AP.

With reference to the second aspect, in a first possible implementation manner of the second aspect, the information about the available AP further includes signal strength of the available AP; and
if there are more than two pieces of information about the available AP, the accessing a wireless local area network WLAN according to the information about the at least one available AP includes:
sorting priorities of more than two available APs according to the signal strength of the available APs, and attempting to access the WLAN starting from the available AP with the highest priority by using the available APs one by one until the access is successful.

With reference to the second aspect or the first possible implementation manner of the second aspect, in a second possible implementation manner of the second aspect, the current location information of the terminal device includes at least one type of the following information: Global Positioning System GPS coordinates, a serving cell identifier, an indoor/outdoor attribute, or a Media Access Control MAC address, an Internet Protocol IP address, and signal strength that are of a found AP; and the first current information further includes at least one type of the following information: radio interference information, temperature and humidity at a current location, or power supply information.

According to a third aspect, an embodiment of the present invention provides a platform device, including:
a receiving module, configured to receive first current information sent by a terminal device, where the first current information includes an access point query request and current location information of the terminal device;
an access point AP determining module, configured to determine, according to the first current information and at least one piece of second current information, an access point AP available to the terminal device, where the second current information includes current location information of the AP and a hidden service set identifier SSID of the AP; and
a sending module, configured to send, to the terminal device, information about the AP available to the terminal device, where the information about the available AP includes the hidden SSID of the AP.

With reference to the third aspect, in a first possible implementation manner of the third aspect, the AP determining module is specifically configured to: match at least one type of information in the first current information with information that is in the at least one piece of second current information and that is corresponding to the at least one type of information, and determine an AP corresponding to the second current information as the AP available to the terminal device, where a matching result of the AP meets a preset available condition.

With reference to the third aspect or the first possible implementation manner of the third aspect, in a second possible implementation manner of the third aspect, the receiving module is further configured to: before the AP determining module determines, according to the first current information and the at least one piece of second current information, the AP available to the terminal device, receive the second current information sent by the AP; and if it is determined, according to the second current information sent by the AP, that the AP is an unregistered access point, register the AP and save the second current information sent by the AP; or if it is determined, according to the second current information sent by the AP, that the AP is a registered access point, update the locally saved second current information according to the second current information sent by the AP.

With reference to the second possible implementation manner of the third aspect, in a third possible implementation manner of the third aspect, the receiving module is specifically configured to: receive the second current information periodically sent by the AP; or receive the second current information sent by the AP when the second current information changes; or periodically send a second current information obtaining request to the AP, and receive the second current information sent by the AP.

With reference to the third aspect or any one of the first to the third possible implementation manners of the third aspect, in a fourth possible implementation manner of the third aspect, the receiving module is specifically configured to: receive the first current information sent by the terminal device, and if the terminal device is an unregistered terminal device, register the terminal device according to the first current information.

With reference to the third aspect or any one of the first to the fourth possible implementation manners of the third aspect, in a fifth possible implementation manner of the third aspect, the current location information of the terminal device includes at least one type of the following information: Global Positioning System GPS coordinates of the terminal device, a serving cell identifier of the terminal device, an indoor/outdoor attribute of the terminal device, or a Media Access Control MAC address, an Internet Protocol IP address, and signal strength that are of an AP found by the terminal device; and the first current information further includes at least one type of the following information: radio interference information of the terminal device, temperature and humidity at a current location of the terminal device, or power supply information of the terminal device.

With reference to the third aspect or any one of the first to the fifth possible implementation manners of the third aspect, in a sixth possible implementation manner of the third aspect, the current location information of the AP includes at least one type of the following information: GPS coordinates of the AP, a serving cell identifier of the AP, an indoor/outdoor attribute of the AP, or a MAC address, an IP address, and signal strength that are of the AP; and the second current information further includes at least one type of the following information: radio interference information of the AP, temperature and humidity at a current location of the AP, or power supply information of the AP.

According to a fourth aspect, an embodiment of the present invention provides a terminal device, including:
a sending module, configured to send first current information to a platform device, where the first current information includes an access point query request and current location information of the terminal device;
a receiving module, configured to receive information that is about at least one available access point AP and that is sent by the platform device, where the information about the available AP includes a hidden service set identifier SSID of the available AP, the information about the available AP is information about an available AP that is determined by the platform device according to the first current information and at least one piece of second current information, and the second current information includes current location information of the AP and the hidden SSID of the AP; and
an access module, configured to access a wireless local area network WLAN according to the information about the at least one available AP.

With reference to the fourth aspect, in a first possible implementation manner of the fourth aspect, the information about the available AP further includes signal strength of the available AP; and
if there are more than two pieces of information about the available AP, the access module is specifically configured to: sort priorities of more than two available APs according to the signal strength of the available APs, and attempt to access the WLAN starting from the available AP with the highest priority by using the available APs one by one until the access is successful.

With reference to the fourth aspect or the first possible implementation manner of the fourth aspect, in a second possible implementation manner of the fourth aspect, the current location information of the terminal device includes at least one type of the following information: Global Positioning System GPS coordinates, a serving cell identifier, an indoor/outdoor attribute, or a Media Access Control MAC address, an Internet Protocol IP address, and signal strength that are of a found AP; and the first current information further includes at least one type of the following information: radio interference information, temperature and humidity at a current location, or power supply information.

According to a fifth aspect, an embodiment of the present invention provides a platform device, including:
a receiver, configured to receive first current information sent by a terminal device, where the first current information includes an access point query request and current location information of the terminal device;
a processor, configured to determine, according to the first current information and at least one piece of second current information, an access point AP available to the terminal device, where the second current information includes current location information of the AP and a hidden service set identifier SSID of the AP; and
a transmitter, configured to send, to the terminal device, information about the AP available to the terminal device, where the information about the available AP includes the hidden SSID of the AP.

With reference to the fifth aspect, in a first possible implementation manner of the fifth aspect, the processor is specifically configured to: match at least one type of information in the first current information with information that is in the at least one piece of second current information and that is corresponding to the at least one type of information, and determine an AP corresponding to the second current information as the AP available to the terminal device, where a matching result of the AP meets a preset available condition.

With reference to the fifth aspect or the first possible implementation manner of the fifth aspect, in a second possible implementation manner of the fifth aspect, the receiver is further configured to receive the second current information sent by the AP, and the processor is further configured to: if it is determined, according to the second current information sent by the AP, that the AP is an unregistered access point, register the AP and save the second current information sent by the AP; or if it is determined, according to the second current information sent by the AP, that the AP is a registered access point, update the locally saved second current information according to the second current information sent by the AP.

With reference to the second possible implementation manner of the fifth aspect, in a third possible implementation manner of the fifth aspect, the receiver is specifically configured to: receive the second current information periodically sent by the AP; or receive the second current information sent by the AP when the second current information changes; or periodically send a second current information obtaining request to the AP, and receive the second current information sent by the AP.

With reference to the fifth aspect or any one of the first to the third possible implementation manners of the fifth aspect, in a fourth possible implementation manner of the fifth aspect, the receiver is specifically configured to: receive the first current information sent by the terminal device, and if the terminal device is an unregistered terminal device, register the terminal device according to the first current information.

With reference to the fifth aspect or any one of the first to the fourth possible implementation manners of the fifth aspect, in a fifth possible implementation manner of the fifth aspect, the current location information of the terminal device includes at least one type of the following information: Global Positioning System GPS coordinates of the terminal device, a serving cell identifier of the terminal device, an indoor/outdoor attribute of the terminal device, or a Media Access Control MAC address, an Internet Protocol IP address, and signal strength that are of an AP found by the terminal device; and the first current information further includes at least one type of the following information: radio interference information of the terminal device, temperature and humidity at a current location of the terminal device, or power supply information of the terminal device.

With reference to the fifth aspect or any one of the first to the fifth possible implementation manners of the fifth aspect, in a sixth possible implementation manner of the fifth aspect, the current location information of the AP includes at least one type of the following information: GPS coordinates of the AP, a serving cell identifier of the AP, an indoor/outdoor attribute of the AP, or a MAC address, an IP address, and signal strength that are of the AP; and the second current information further includes at least one type of the following information: radio interference information of the AP, temperature and humidity at a current location of the AP, or power supply information of the AP.

According to a sixth aspect, an embodiment of the present invention provides a terminal device, including:
a transmitter, configured to send first current information to a platform device, where the first current information includes an access point query request and current location information of the terminal device;
a receiver, configured to receive information that is about at least one available access point AP and that is sent by the platform device, where the information about the available AP includes a hidden service set identifier SSID of the available AP, the information about the available AP is information about an available AP that is determined by the platform device according to the first current information and at least one piece of second current information, and the second current information includes current location information of the AP and the hidden SSID of the AP; and
a processor, configured to access a wireless local area network WLAN according to the information about the at least one available AP.

With reference to the sixth aspect, in a first possible implementation manner of the sixth aspect, the information about the available AP further includes signal strength of the available AP; and
if there are more than two pieces of information about the available AP, the processor is specifically configured to: sort priorities of more than two available APs according to the signal strength of the available APs, and attempt to access the WLAN starting from the available AP with the highest priority by using the available APs one by one until the access is successful.

With reference to the sixth aspect or the first possible implementation manner of the sixth aspect, in a second possible implementation manner of the sixth aspect, the current location information of the terminal device includes at least one type of the following information: Global Positioning System GPS coordinates, a serving cell identifier, an indoor/outdoor attribute, or a Media Access Control MAC address, an Internet Protocol IP address, and signal strength that are of a found AP; and the first current information further includes at least one type of the following information: radio interference information, temperature and humidity at a current location, or power supply information.

According to a seventh aspect, an embodiment of the present invention provides a hidden hotspot access system, including: a platform device, a terminal device, and an access point AP.

The platform device may be the platform device according to the third aspect or any one of the first to the sixth possible implementation manners of the third aspect. The terminal device may be the terminal device according to the fourth aspect or either one of the first and the second possible implementation manners of the fourth aspect. A service set identifier SSID of the AP is in a hidden state.

According to an eighth aspect, an embodiment of the present invention provides a hidden hotspot access system, including: a platform device, a terminal device, and an access point AP.

The platform device may be the platform device according to the fifth aspect or any one of the first to the sixth possible implementation manners of the fifth aspect. The terminal device may be the terminal device according to the sixth aspect or either one of the first and the second possible implementation manners of the sixth aspect. A service set identifier SSID of the AP is in a hidden state.

According to the hidden hotspot access method and apparatus in the embodiments of the present invention, an AP available to a terminal device is determined according to first current information of the terminal device and second current information of an AP. The available AP includes an AP with a hidden SSID. Therefore, the terminal device can find the AP with the hidden SSID, and access a WLAN by using the AP with the hidden SSID, so as to resolve a problem that a terminal has extremely low WLAN access efficiency.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of an embodiment of a hidden hotspot access method according to the present invention;
FIG. 2 is a flowchart of another embodiment of a hidden hotspot access method according to the present invention;
FIG. 3 is a flowchart of still another embodiment of a hidden hotspot access method according to the present invention;
FIG. 4 is a schematic structural diagram of an embodiment of a platform device according to the present invention;
FIG. 5 is a schematic structural diagram of an embodiment of a terminal device according to the present invention; and
FIG. 6 is a schematic structural diagram of another embodiment of a platform device according to the present invention;
FIG. 7 is a schematic structural diagram of another embodiment of a terminal device according to the present invention; and
FIG. 8 is a schematic structural diagram of an embodiment of a hidden hotspot access system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

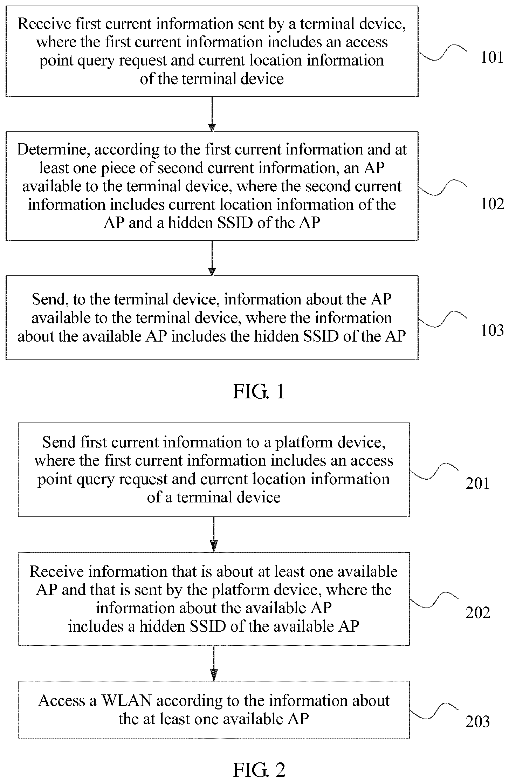

FIG. 1 is a flowchart of an embodiment of a hidden hotspot access method according to the present invention. As shown in FIG. 1, the method in this embodiment may include the following steps.

Step 101: Receive first current information sent by a terminal device, where the first current information includes an access point query request and current location information of the terminal device.

This embodiment may be performed by a platform device. The platform device may be an independent entity and be deployed in a wireless system, and may communicate with an AP and the terminal device. The platform device may be a module integrated on a server at an access control layer in the wireless system. For example, the server may be a core network server or a module in an authentication server, and this is not specifically limited herein. In addition, an AP in the present invention may be a terminal device that can enable a WLAN, for example, may be a mobile phone, a wireless hotspot, or a notebook computer. The platform device receives the first current information sent by the terminal device. The first current information is information that is sent by the terminal device to the platform device when the terminal device needs a WLAN. The first current information includes the access point query request and the current location information of the terminal device. The access point query request may be a request that is for searching for an AP and that is sent by the terminal device to the platform device. The current location information of the terminal device indicates a location of the terminal device, so that the platform device searches for an AP within the location range according to the location information.

Step 102: Determine, according to the first current information and at least one piece of second current information, an AP available to the terminal device, where the second current information includes current location information of the AP and a hidden SSID of the AP.

The platform device determines the AP available to the terminal device according to two types of information: the first current information and the at least one piece of second current information. The first current information is information sent by a terminal device that needs to search for an AP to access a WLAN. The second current information is information related to an AP, that is, each AP is corresponding to one piece of second current information. The second current information includes information about an AP whose service set identifier (Service Set Identifier, SSID for short) is set to a hidden state. The platform device matches current location information of the terminal device in the first current information with current location information of all the APs in all the second current information. For example, if the current location information of the terminal device is GPS coordinates, and the current location information of the AP also includes GPS coordinates, the GPS coordinates of the terminal device are matched with the GPS coordinates of the AP to calculate a distance between the two. An AP corresponding to the second current information is determined as the AP available to the terminal device. A matching result of the AP meets a preset available condition. For example, the preset available condition is set as that the distance is less than 30 meters. In this case, if the distance between the GPS coordinates of the terminal device and the GPS coordinates of the AP is less than 30 meters, the AP is the AP available to the terminal device. Specifically, the second current information may be saved in the platform device in advance; or the platform device may periodically and actively obtain the second current information from at least one AP; or when information of the AP changes, for example, a location changes or a hidden attribute of the SSID changes, the AP may actively send the second current information to the platform device.

In a process of determining the available AP, the platform device may match the first current information of the terminal device with the second current information of the AP to determine an AP that the terminal device may access. When performing matching, the platform device uses the AP with the hidden SSID as a candidate AP. Therefore, the available AP determined by the platform device also includes the AP with the hidden SSID, but this type of AP cannot be found by the terminal device. The available AP in the present invention means that the AP is probabilistically available, but does not indicate that the terminal device can certainly access the WLAN by using these APs.

Step 103: Send, to the terminal device, information about the AP available to the terminal device, where the information about the available AP includes the hidden SSID of the AP.

The platform device sends the information about the available AP to the terminal device. Herein there may be at least one available AP. Therefore, the terminal device may attempt to access the WLAN by using the at least one available AP one by one until the access is successful.

In this embodiment, an AP available to a terminal device is determined according to first current information of the terminal device and second current information of an AP. These available APs include an AP with a hidden SSID. Therefore, the terminal device can find the AP with the hidden SSID, and access a WLAN by using the AP with the hidden SSID, so as to resolve a problem that a terminal has low WLAN access efficiency.

Further, the current location information of the terminal device includes at least one type of the following information: Global Positioning System (Global Positioning System, GPS for short) coordinates of the terminal device, a serving cell identifier of the terminal device, an indoor/outdoor attribute of the terminal device, or a Media Access Control (Media Access Control, MAC for short) address, an Internet Protocol (Internet Protocol, IP for short) address, and signal strength that are of an AP found by the terminal device. The first current information further includes at least one type of the following information: radio interference information of the terminal device, temperature and humidity at a current location of the terminal device, or power supply information of the terminal device.

In order that availability of the available AP determined by the platform device is as high as possible, the first current information sent by the terminal device to the platform device may include types of information about the terminal device as much as possible. The platform device may accurately find, according to the current location information of the terminal device, an AP within a range in which the location can reach. Information indicating the current location may be the GPS coordinates (for example, a longitude, a latitude, and an altitude) of the terminal device, the serving cell identifier of the terminal device, information indicating whether the terminal device is located indoors or outdoors, and the MAC address, the IP address, and the signal strength that are of the AP found by the terminal device. These pieces of information all may be used as assistance information that indicates the current location of the terminal device. The GPS coordinates accurately indicate the location of the terminal device. The platform device may obtain a distance between each AP and the terminal device according to the GPS coordinates, and then select an available AP. The serving cell identifier of the terminal device indicates the location of the terminal device with the help of cell deployment. The platform device may select, according to the serving cell identifier of the terminal device, an AP in a serving cell the same as the terminal device or in a neighboring cell of a serving cell in which the terminal device is located, and use the AP as the AP available to the terminal device. The information indicating whether the terminal device is located indoors or outdoors is helpful for the platform device to select an AP that has a same indoor/outdoor attribute as the terminal device. Because indoor and outdoor channel environments are different, preset available conditions are also different. Therefore, the platform device selects, for the terminal device, an AP that has a same attribute as the terminal device. The MAC address, the IP address, and the signal strength that are of the AP found by the terminal device may enable the platform device to locate the location of the terminal device according to the information of the AP that can be found by the terminal device and with reference to information such as a wireless search range, so as to determine, for the terminal device, all available APs near the location of the terminal device. The first current information further includes the radio interference information, the temperature and the humidity at the current location, and information indicating whether a battery or an alternating current supplies power to the terminal device. An AP and a terminal device that are located in a similar environment have similar radio interference, similar temperature and humidity, and a similar power supply system. Therefore, the foregoing information may be used as a basis for determining whether an AP is available.

Further, the current location information of the AP includes at least one type of the following information: GPS coordinates of the AP, a serving cell identifier of the AP, an indoor/outdoor attribute of the AP, or a MAC address, an IP address, and signal strength that are of the AP. The second current information further includes at least one type of the following information: radio interference information of the AP, temperature and humidity at a current location of the AP, or power supply information of the AP.

The platform device may match the foregoing second current information with corresponding information in the first current information of the terminal device.

Further, a specific implementation method of the foregoing step 102 may be: matching at least one type of information in the first current information with information that is in the at least one piece of second current information and that is corresponding to the at least one type of information, and determining an AP corresponding to the second current information as the AP available to the terminal device. A matching result of the AP meets a preset available condition.

Specifically, the platform device matches at least one type of information in the first current information of the terminal device with information that is in locally saved second current information of all APs and that is corresponding to the at least one type of information in the first current information. For example, the GPS coordinates in the first current information of the terminal device are matched with GPS coordinates in the second current information of all the APs that is saved in the platform device. Alternatively, the serving cell identifier in the first current information of the terminal device is matched with a serving cell identifier in the second current information of all the APs that is saved in the platform device. The indoor/outdoor attribute in the first current information of the terminal device is matched with an indoor/outdoor attribute in the second current information of all the APs that is saved in the platform device. The radio interference information in the first current information of the terminal device is matched with radio interference information in the second current information of all the APs that is saved in the platform device. That is, the three types of information in the first current information of the terminal device are respectively matched with the corresponding three types of information in the second current information that are of all the APs and that are saved in the platform device.

The following describes a matching process by using specific examples. Table 1 is an example of second current information of an AP, and Table 2 is an example of first current information of a terminal device that requests an AP query.

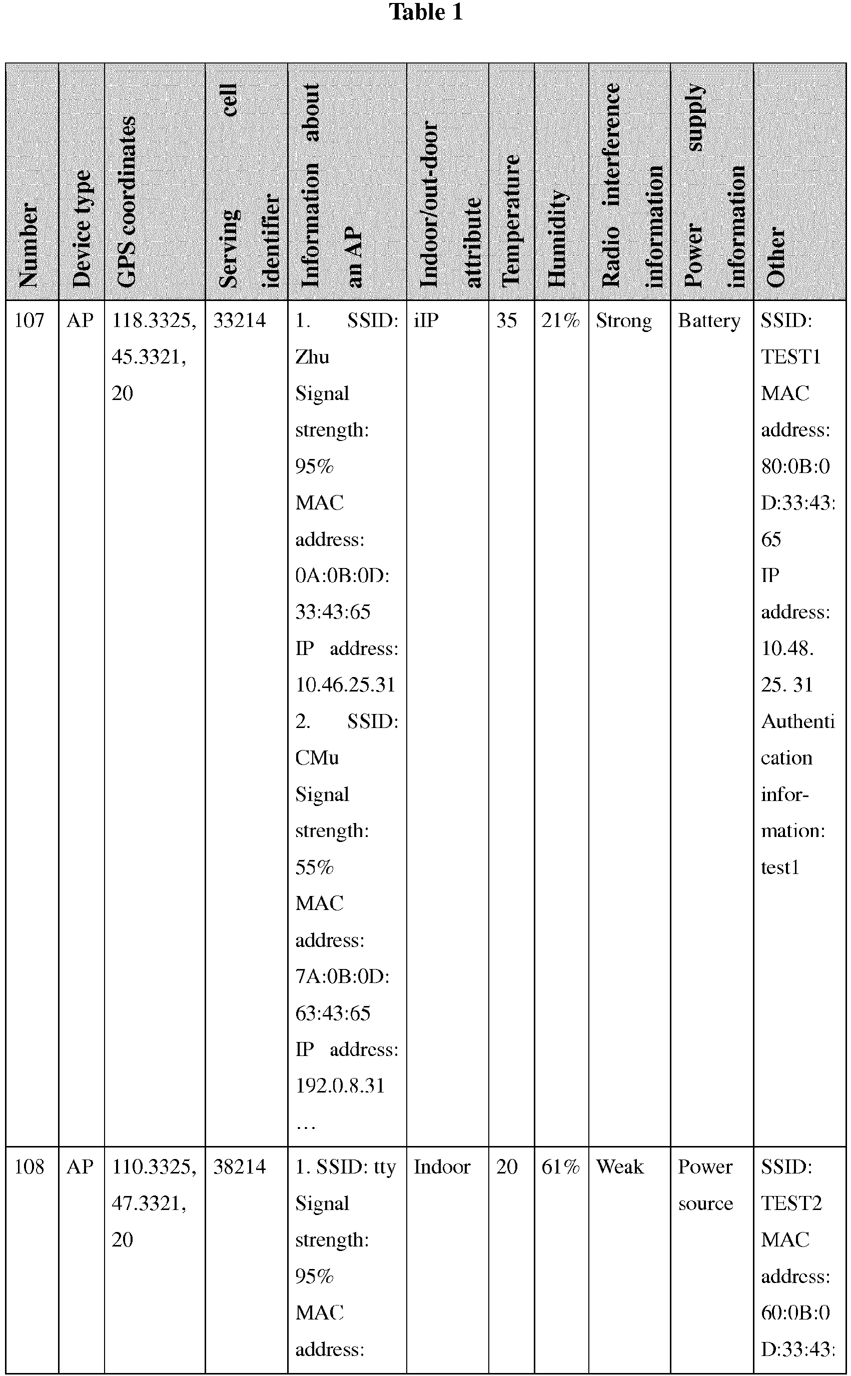

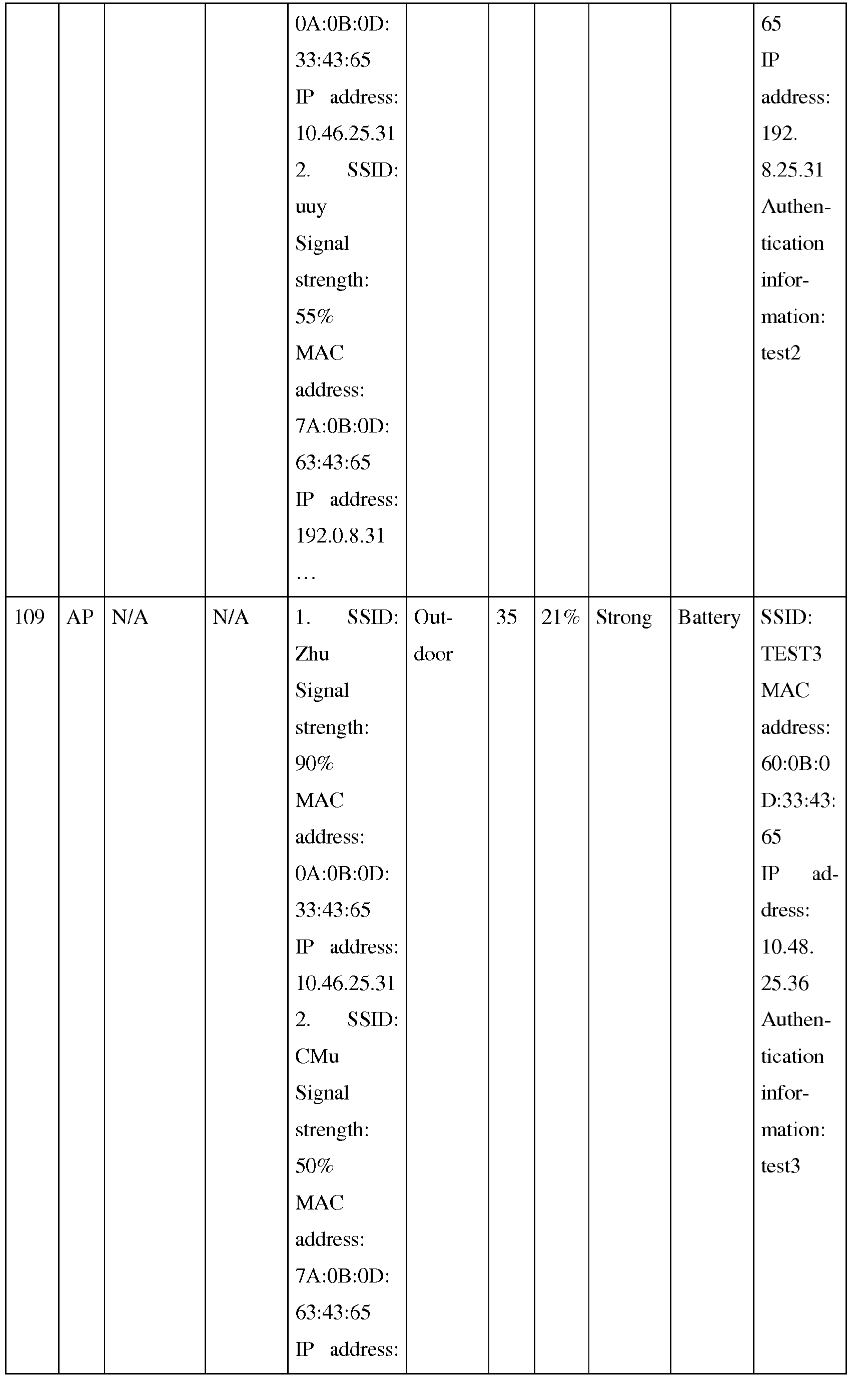

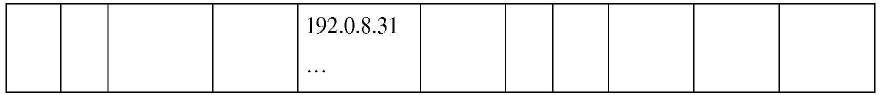

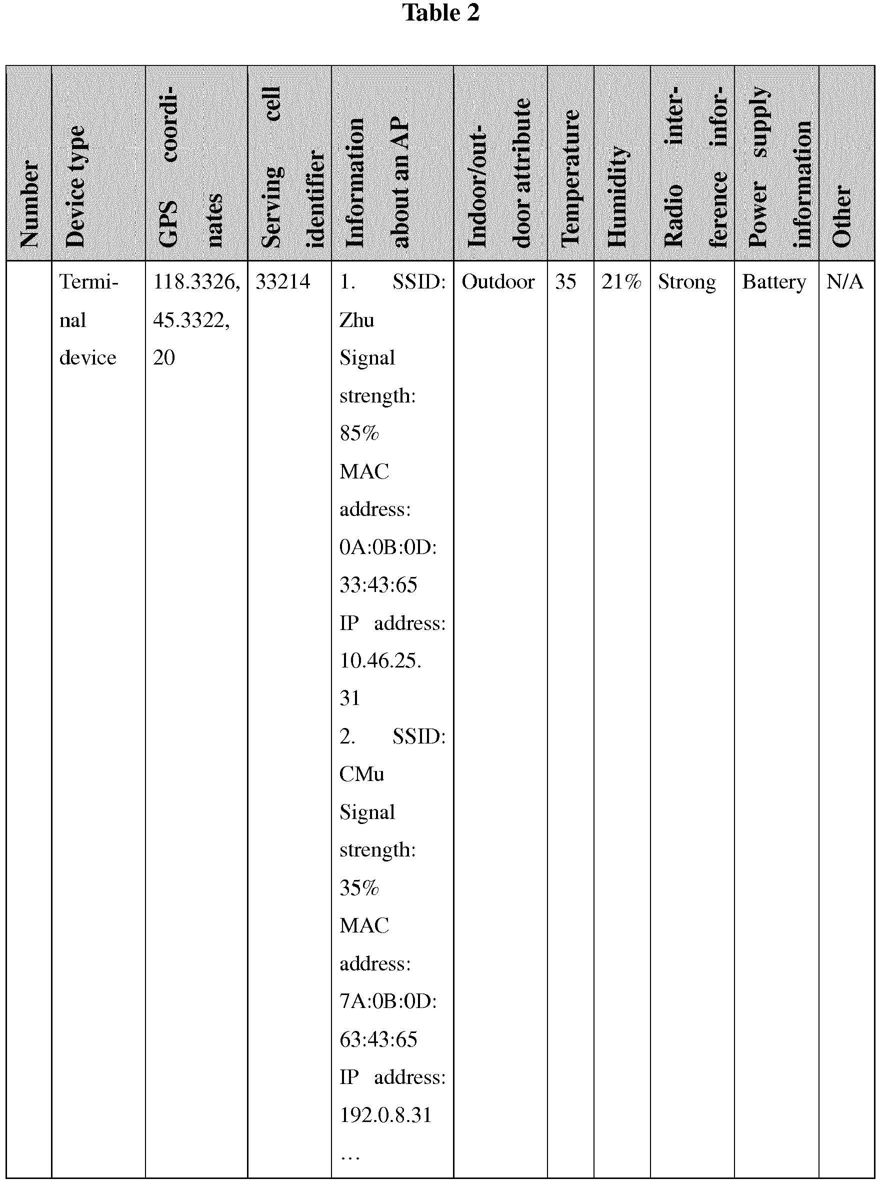

A core of a preset available condition in the matching process is determining whether a physical distance between the terminal device and the AP can be reached, that is, whether the physical distance between the terminal device and the AP is in a range in which the AP can be connected. Generally, a WLAN transmission distance ranges from 20 meters to 200 meters, and this is specifically determined according to a blocking status.
(1) When both current location information of the terminal device and current location information of the AP include indoor/outdoor attribute information, matching may be performed according to the indoor/outdoor attribute of the terminal device and that of the AP. In this case, for example, the preset available condition may be set as that both the terminal device and the AP belong to an indoor device or belong to an outdoor device. For example, the terminal device in Table 2 is located indoors. In this case, the three APs in Table 1 can be determined as available APs provided that the indoor/outdoor attributes of the APs are indoor devices.
(2) When both current location information of the terminal device and current location information of the AP include GPS coordinates, matching may be performed according to the GPS coordinates of the terminal device and those of the AP. In this case, for example, the preset available condition may be set as that a distance is less than a preset distance, for example, less than 30 meters. For example, the GPS coordinates of the terminal device in Table 2 are (118.3326, 45.3322, 20), the GPS coordinates of the AP 107 in Table 1 are (118.3325, 45.3321, 20), the GPS coordinates of the AP 108 are (110.3325, 47.3321, 20), and the GPS coordinates of the AP 109 are N/A. A distance between the GPS coordinates of the terminal device and those of the APs is calculated. A difference between the GPS coordinates of the terminal device and those of the AP 107 is (0.0001, 0.0001, 0), and an equivalent physical distance is about 25 meters. A difference between the GPS coordinates of the terminal device and those of the AP 108 is (8.0001, 2, 0). An AP in the three APs in Table 1 can be determined as an available AP provided that a physical distance between GPS coordinates of the AP and the GPS coordinates of the terminal device is less than 30 meters.
(3) When both current location information of the terminal device and current location information of the AP include a serving cell identifier, matching may be performed according to the serving cell identifier of the terminal device and that of the AP. In this case, for example, the preset available condition may be set as that the terminal device and the AP belong to a same serving cell. For example, the serving cell identifier of the terminal device in Table 2 is 33214. The three APs in Table 1 can be determined as available APs provided that the serving cell identifiers of the APs are 33214.
(4) When both current location information of the terminal device and current location information of the AP include a MAC address, an IP address, and signal strength that are of an AP, matching may be performed according to the MAC address, the IP address, and the signal strength that are of the AP found by the terminal device. In this case, for example, the preset available condition may be set as that the foregoing information has a same or similar feature when the information is compared. For example, an AP found by the terminal device in Table 2 includes (1. SSID: Zhu, signal strength: 85%, MAC address: 0A:0B:0D:33:43:65, IP address: 10.46.25.31; 2. SSID: CMu, signal strength: 35%, MAC address: 7A:0B:0D:63:43:65, IP address: 192.0.8.31). The three APs in Table 1 can be determined as available APs provided that the foregoing three pieces of information of the APs have information the same as or similar to the three pieces of information of the AP found by the terminal device.
(5) When both current location information of the terminal device and current location information of the AP include radio interference information, temperature and humidity at a current location, and power supply information, matching may be performed according to the radio interference information of the terminal device, the temperature and humidity at the current location of the terminal device, and the power supply information of the terminal device. In this case, for example, the preset available condition may be set as that the foregoing information has a same or similar feature when the information is compared. An AP and a terminal device that are located in a similar environment have similar radio interference, similar temperature and humidity, and a similar power supply system. For example, the terminal device in Table 2 is strongly interfered, ambient temperature is 35°C, ambient humidity is 21%, and a battery supplies power (a battery usually needs to supply power to a device located outdoors). The AP 107 in Table 1 is strongly interfered, ambient temperature is 35°C, ambient humidity is 21%, and a battery supplies power. The AP 108 is weakly interfered, ambient temperature is 20°C, ambient humidity is 61%, and a battery supplies power (a power source usually needs to supply power to a device located indoors). The AP 109 is strongly interfered, ambient temperature is 35°C, ambient humidity is 21%, and a battery supplies power. The three APs in Table 1 can be determined as available APs provided that the foregoing three pieces of information of the APs have information the same as or similar to the three pieces of information of the terminal device.

In conclusion, it can be learned from the matching of the foregoing one or more types of information that, a distance between the GPS coordinates of the terminal device and those of the AP 107 is 25 meters, and the terminal device and the AP 107 are located in a same serving cell. Each of the radio interference in an environment in which the terminal device is located, the temperature and the humidity, and the power supply information about the terminal device is basically the same as each of the radio interference in an environment in which the AP 107 is located, the temperature and the humidity, and the power supply information about the AP 107. Therefore, it may be learned that the AP 107 is in a range that the terminal device can reach, and the AP 107 may be determined as one of available APs. Because the AP 108 is extremely far from the terminal device, and other information of the AP 108 is not similar to that of the terminal device, the AP 108 is unavailable. Likewise, the AP 109 is also one of available APs.

FIG. 2 is a flowchart of another embodiment of a hidden hotspot access method according to the present invention. As shown in FIG. 2, the method in this embodiment may include the following steps.

Step 201: Send first current information to a platform device, where the first current information includes an access point query request and current location information of a terminal device.

This embodiment may be performed by any terminal device that has a WLAN access function. Step 201 is corresponding to the foregoing step 101 and is not described in detail herein again.

Step 202: Receive information that is about at least one available AP and that is sent by the platform device, where the information about the available AP includes a hidden SSID of the available AP.

The information about the available AP is information about an available AP that is determined by the platform device according to the first current information and at least one piece of second current information. The second current information includes current location information of the AP and the hidden SSID of the AP. Step 202 is corresponding to the foregoing step 103 and is not described in detail herein again.

Step 203: Access a WLAN according to the information about the at least one available AP.

In this embodiment, when a terminal device needs to access a WLAN by using an AP, the terminal device sends first current information to a platform device, and then attempts to access the WLAN by using available APs one by one by using information about the APs. Therefore, the terminal device can find an AP with a hidden SSID, and access the WLAN by using the AP with the hidden SSID, so as to resolve a problem that a terminal has extremely low WLAN access efficiency.

Further, the current location information of the terminal device includes at least one type of the following information: Global Positioning System GPS coordinates, a serving cell identifier, an indoor/outdoor attribute, or a Media Access Control MAC address, an Internet Protocol IP address, and signal strength that are of a found AP. The first current information further includes at least one type of the following information: radio interference information, temperature and humidity at a current location, or power supply information.

Further, the information about the available AP further includes signal strength of the available AP. If there are more than two pieces of information about the available AP, a specific implementation method of the foregoing step 203 may be: sorting priorities of more than two available APs according to the signal strength of the available APs, and attempting to access the WLAN starting from the available AP with the highest priority by using the available APs one by one until the access is successful.

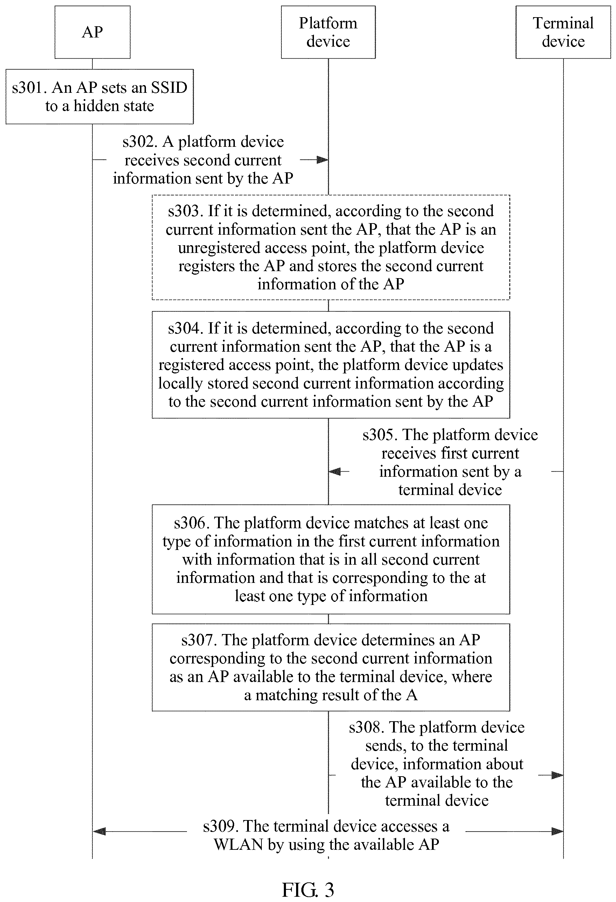

FIG. 3 is a flowchart of still another embodiment of a hidden hotspot access method according to the present invention. As shown in FIG. 3, the method in this embodiment may include the following steps.

s301. An AP sets an SSID to a hidden state.

s302. A platform device receives second current information sent by the AP.

There may be three receiving manners in s302. A first manner is receiving the second current information periodically sent by the AP. A second manner is receiving the second current information sent by the AP when the second current information changes. A third manner is periodically sending a second current information obtaining request to the AP, and receiving the second current information sent by the AP. That is, the platform device may actively and periodically query whether the second current information of the AP changes and needs to be updated, or the AP may update local information when the second current information of the AP changes, or the AP may periodically trigger the platform device to update local information.

s303. If it is determined, according to the second current information sent by the AP, that the AP is an unregistered access point, the platform device registers the AP and saves the second current information of the AP.

Step s303 is an optional step. Only when the AP is an unregistered access point, it is required to register the AP and save the second current information of the AP. Registration in this embodiment may be considered as that the platform device has recorded the SSID of the AP before receiving the second current information sent by the AP. If the platform device has not recorded the SSID of the AP, it indicates that the AP has not been registered. Therefore, after receiving the second current information sent by the AP, the platform device saves the second current information, and records the SSID of the AP to complete registration.

s304. If it is determined, according to the second current information sent by the AP, that the AP is a registered access point, the platform device updates locally saved second current information according to the second current information sent by the AP.

s305. The platform device receives first current information sent by a terminal device.

There is a special case for s305. That is, if the terminal device is an unregistered terminal device, the platform device registers the terminal device according to the first current information.

Similarly, registration of the terminal device may be considered as whether the platform device records identification information of the terminal device, for example, a MAC address of the terminal device or identity of the terminal device in a wireless system.

s306. The platform device matches at least one type of information in the first current information with information that is in all second current information and that is corresponding to the at least one type of information.

A matching process has been described in the foregoing method embodiment and is not described in detail herein again.

s307. The platform device determines an AP corresponding to the second current information as an AP available to the terminal device, where a matching result of the AP meets a preset available condition.

s308. The platform device sends, to the terminal device, information about the AP available to the terminal device.

s309. The terminal device accesses a WLAN by using the available AP.

In this embodiment, an AP available to a terminal device is determined according to first current information of the terminal device and second current information of an AP, and these available APs include an AP with a hidden SSID. Therefore, the terminal device can find the AP with the hidden SSID, and access a WLAN by using the AP with the hidden SSID, so as to resolve a problem that a terminal has extremely low WLAN access efficiency.

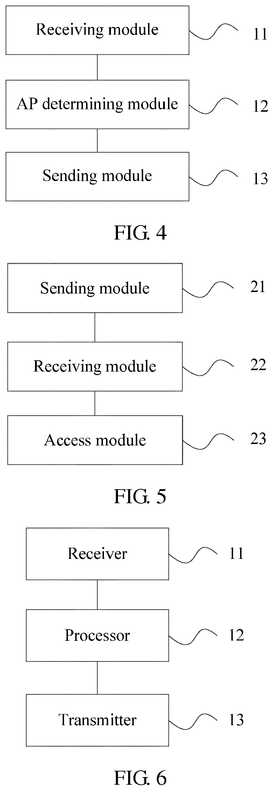

FIG. 4 is a schematic structural diagram of an embodiment of a platform device according to the present invention. As shown in FIG. 4, the apparatus in this embodiment may include: a receiving module 11, an AP determining module 12, and a sending module 13. The receiving module 11 is configured to receive first current information sent by a terminal device. The first current information includes an access point query request and current location information of the terminal device. The AP determining module 12 is configured to determine, according to the first current information and at least one piece of second current information, an access point AP available to the terminal device. The second current information includes current location information of the AP and a hidden service set identifier SSID of the AP. The sending module 13 is configured to send, to the terminal device, information about the AP available to the terminal device. The information about the available AP includes the hidden SSID of the AP.

The apparatus in this embodiment may be configured to execute the technical solution in the method embodiment shown in FIG. 1 or FIG. 2, and implementation principles and technical effects thereof are similar and are not described in detail herein.

Further, the current location information of the terminal device includes at least one type of the following information: Global Positioning System GPS coordinates of the terminal device, a serving cell identifier of the terminal device, an indoor/outdoor attribute of the terminal device, or a Media Access Control MAC address, an Internet Protocol IP address, and signal strength that are of an AP found by the terminal device. The first current information further includes at least one type of the following information: radio interference information of the terminal device, temperature and humidity at a current location of the terminal device, or power supply information of the terminal device.

Further, the current location information of the AP includes at least one type of the following information: GPS coordinates of the AP, a serving cell identifier of the AP, an indoor/outdoor attribute of the AP, or a MAC address, an IP address, and signal strength that are of the AP. The second current information further includes at least one type of the following information: radio interference information of the AP, temperature and humidity at a current location of the AP, or power supply information of the AP.

Further, the AP determining module 12 is specifically configured to: match at least one type of information in the first current information with information that is in the at least one piece of second current information and that is corresponding to the at least one type of information, and determine an AP corresponding to the second current information as the AP available to the terminal device. A matching result of the AP meets a preset available condition.

Further, the receiving module 11 is further configured to: before the AP determining module determines, according to the first current information and the at least one piece of second current information, the AP available to the terminal device, receive the second current information sent by the AP; and if it is determined, according to the second current information sent by the AP, that the AP is an unregistered access point, register the AP and save the second current information sent by the AP; or if it is determined, according to the second current information sent by the AP, that the AP is a registered access point, update the locally saved second current information according to the second current information sent by the AP.

Further, the receiving module 11 is specifically configured to: receive the second current information periodically sent by the AP; or receive the second current information sent by the AP when the second current information changes; or periodically send a second current information obtaining request to the AP, and receive the second current information sent by the AP.

Further, the receiving module 11 is specifically configured to: receive the first current information sent by the terminal device, and if the terminal device is an unregistered terminal device, register the terminal device according to the first current information.

FIG. 5 is a schematic structural diagram of an embodiment of a terminal device according to the present invention. As shown in FIG. 5, the apparatus in this embodiment may include: a sending module 21, a receiving module 22, and an access module 23. The sending module 21 is configured to send first current information to a platform device. The first current information includes an access point query request and current location information of the terminal device. The receiving module 22 is configured to receive information that is about at least one available access point AP and that is sent by the platform device. The information about the available AP includes a hidden service set identifier SSID of the available AP, the information about the available AP is information about an available AP that is determined by the platform device according to the first current information and at least one piece of second current information, and the second current information includes current location information of the AP and the hidden SSID of the AP. The access module 23 is configured to access a wireless local area network WLAN according to the information about the at least one available AP.

The apparatus in this embodiment may be configured to execute the technical solution in the method embodiment shown in FIG. 3, and implementation principles and technical effects thereof are similar and are not described in detail herein.

Further, the current location information of the terminal device includes at least one type of the following information: Global Positioning System GPS coordinates, a serving cell identifier, an indoor/outdoor attribute, or a Media Access Control MAC address, an Internet Protocol IP address, and signal strength that are of a found AP. The first current information further includes at least one type of the following information: radio interference information, temperature and humidity at a current location, or power supply information.

Further, the information about the available AP further includes signal strength of the available AP. If there are more than two pieces of information about the available AP, the access module 23 is specifically configured to: sort priorities of more than two available APs according to the signal strength of the available APs, and attempt to access the WLAN starting from the available AP with the highest priority by using the available APs one by one until the access is successful.

FIG. 6 is a schematic structural diagram of another embodiment of a platform device according to the present invention. As shown in FIG. 6, the apparatus in this embodiment may include: a receiver 11, a processor 12, and a transmitter 13. The receiver 11 is configured to receive first current information sent by a terminal device. The first current information includes an access point query request and current location information of the terminal device. The processor 12 is configured to determine, according to the first current information and at least one piece of second current information, an access point AP available to the terminal device. The second current information includes current location information of the AP and a hidden service set identifier SSID of the AP. The transmitter 13 is configured to send, to the terminal device, information about the AP available to the terminal device. The information about the available AP includes the hidden SSID of the AP.

The apparatus in this embodiment may be configured to execute the technical solution in the method embodiment shown in FIG. 1 or FIG. 2, and implementation principles and technical effects thereof are similar and are not described in detail herein.

Further, the current location information of the terminal device includes at least one type of the following information: Global Positioning System GPS coordinates of the terminal device, a serving cell identifier of the terminal device, an indoor/outdoor attribute of the terminal device, or a Media Access Control MAC address, an Internet Protocol IP address, and signal strength that are of an AP found by the terminal device. The first current information further includes at least one type of the following information: radio interference information of the terminal device, temperature and humidity at a current location of the terminal device, or power supply information of the terminal device.

Further, the current location information of the AP includes at least one type of the following information: GPS coordinates of the AP, a serving cell identifier of the AP, an indoor/outdoor attribute of the AP, or a MAC address, an IP address, and signal strength that are of the AP. The second current information further includes at least one type of the following information: radio interference information of the AP, temperature and humidity at a current location of the AP, or power supply information of the AP.

Further, the processor 12 is specifically configured to: match at least one type of information in the first current information with information that is in the at least one piece of second current information and that is corresponding to the at least one type of information, and determine an AP corresponding to the second current information as the AP available to the terminal device. A matching result of the AP meets a preset available condition.

Further, the receiver 11 is further configured to receive the second current information sent by the AP. The processor is further configured to: if it is determined, according to the second current information sent by the AP, that the AP is an unregistered access point, register the AP and save the second current information sent by the AP; or if it is determined, according to the second current information sent by the AP, that the AP is a registered access point, update the locally saved second current information according to the second current information sent by the AP.

Further, the receiver 11 is specifically configured to: receive the second current information periodically sent by the AP; or receive the second current information sent by the AP when the second current information changes; or periodically send a second current information obtaining request to the AP, and receive the second current information sent by the AP.

Further, the receiver 11 is specifically configured to: receive the first current information sent by the terminal device, and if the terminal device is an unregistered terminal device, register the terminal device according to the first current information.

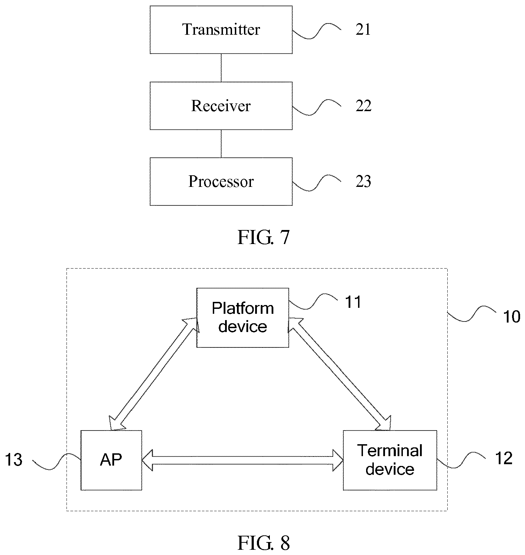

FIG. 7 is a schematic structural diagram of another embodiment of a terminal device according to the present invention. As shown in FIG. 7, the apparatus in this embodiment may include: a transmitter 21, a receiver 22, and a processor 23. The transmitter 21 is configured to send first current information to a platform device. The first current information includes an access point query request and current location information of the terminal device. The receiver 22 is configured to receive information that is about at least one available access point AP and that is sent by the platform device. The information about the available AP includes a hidden service set identifier SSID of the available AP, the information about the available AP is information about an available AP that is determined by the platform device according to the first current information and at least one piece of second current information, and the second current information includes current location information of the AP and the hidden SSID of the AP. The processor 23 is configured to access a wireless local area network WLAN according to the information about the at least one available AP.

The apparatus in this embodiment may be configured to execute the technical solution in the method embodiment shown in FIG. 3, and implementation principles and technical effects thereof are similar and are not described in detail herein.

Further, the current location information of the terminal device includes at least one type of the following information: Global Positioning System GPS coordinates, a serving cell identifier, an indoor/outdoor attribute, or a Media Access Control MAC address, an Internet Protocol IP address, and signal strength that are of a found AP. The first current information further includes at least one type of the following information: radio interference information, temperature and humidity at a current location, or power supply information.

Further, the information about the available AP further includes signal strength of the available AP. If there are more than two pieces of information about the available AP, the processor 23 is specifically configured to: sort priorities of more than two available APs according to the signal strength of the available APs, and attempt to access the WLAN starting from the available AP with the highest priority by using the available APs one by one until the access is successful.

FIG. 8 is a schematic structural diagram of an embodiment of a hidden hotspot access system according to the present invention. As shown in FIG. 8, the hidden hotspot access system 10 in this embodiment includes: a platform device 11, a terminal device 12, and an AP 13. The platform device 11 may use a structure in the apparatus embodiment shown in FIG. 4. Correspondingly, the platform device 11 may execute the technical solution in the method embodiment shown in FIG. 1 or FIG. 2, and implementation principles and technical effects thereof are similar and are not described in detail herein. The terminal device 12 may use a structure in the apparatus embodiment shown in FIG. 5. Correspondingly, the terminal device 12 may execute the technical solution in the method embodiment shown in FIG. 3, and implementation principles and technical effects thereof are similar and are not described in detail herein. An SSID of the AP 13 is in a hidden state.

Further, the platform device 11 may use a structure in the apparatus embodiment shown in FIG. 6. Correspondingly, the platform device 11 may execute the technical solution in the method embodiment shown in FIG. 1 or FIG. 2, and implementation principles and technical effects thereof are similar and are not described in detail herein. The terminal device 12 may use a structure in the apparatus embodiment shown in FIG. 7. Correspondingly, the terminal device 12 may execute the technical solution in the method embodiment shown in FIG. 3, and implementation principles and technical effects thereof are similar and are not described in detail herein. An SSID of the AP 13 is in a hidden state.

In the several embodiments provided in the present invention, it should be understood that the disclosed apparatus and method may be implemented in other manners. For example, the apparatus embodiment is merely described as an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be saved in a computer-readable storage medium. The software functional unit is saved in a storage medium and includes several instructions for instructing a computer device (which may be a personal computer, a server, or a network device) or a processor to perform a part of the steps of the methods described in the embodiments of the present invention. The foregoing storage medium includes: any medium that can save program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments and are not described in detail herein.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A hidden hotspot access method, comprising:
receiving first current information sent by a terminal device, wherein the first current information comprises an access point query request and current location information of the terminal device;
determining, according to the first current information and at least one piece of second current information, an access point AP available to the terminal device, wherein the second current information comprises current location information of the AP and a hidden service set identifier SSID of the AP; and
sending, to the terminal device, information about the AP available to the terminal device, wherein the information about the available AP comprises the hidden SSID of the AP.

2. The method according to claim 1, wherein the determining, according to the first current information and at least one piece of second current information, an access point AP available to the terminal device comprises:
matching at least one type of information in the first current information with information that is in the at least one piece of second current information and that is corresponding to the at least one type of information; and
determining an AP corresponding to the second current information as the AP available to the terminal device, wherein a matching result of the AP meets a preset available condition.

3. The method according to claim 1 or 2, before the determining, according to the first current information and at least one piece of second current information, an access point AP available to the terminal device, further comprising:
receiving the second current information sent by the AP; and
if it is determined, according to the second current information sent by the AP, that the AP is an unregistered access point, registering the AP and saving the second current information sent by the AP; or if it is determined, according to the second current information sent by the AP, that the AP is a registered access point, updating locally saved second current information according to the second current information sent by the AP.

4. The method according to claim 3, wherein the receiving the second current information sent by the AP comprises:
receiving the second current information periodically sent by the AP; or
receiving the second current information sent by the AP when the second current information changes; or
periodically sending a second current information obtaining request to the AP, and receiving the second current information sent by the AP.

5. The method according to any one of claims 1 to 4, wherein the receiving first current information sent by a terminal device comprises:
receiving the first current information sent by the terminal device, and if the terminal device is an unregistered terminal device, registering the terminal device according to the first current information.

6. The method according to any one of claims 1 to 5, wherein the current location information of the terminal device comprises at least one type of the following information: Global Positioning System GPS coordinates of the terminal device, a serving cell identifier of the terminal device, an indoor/outdoor attribute of the terminal device, or a Media Access Control MAC address, an Internet Protocol IP address, and signal strength that are of an AP found by the terminal device; and the first current information further comprises at least one type of the following information: radio interference information of the terminal device, temperature and humidity at a current location of the terminal device, or power supply information of the terminal device.

7. The method according to any one of claims 1 to 6, wherein the current location information of the AP comprises at least one type of the following information: GPS coordinates of the AP, a serving cell identifier of the AP, an indoor/outdoor attribute of the AP, or a MAC address, an IP address, and signal strength that are of the AP; and the second current information further comprises at least one type of the following information: radio interference information of the AP, temperature and humidity at a current location of the AP, or power supply information of the AP.

8. A hidden hotspot access method, comprising:
sending, by a terminal device, first current information to a platform device, wherein the first current information comprises an access point query request and current location information of the terminal device;
receiving information that is about at least one available access point AP and that is sent by the platform device, wherein the information about the available AP comprises a hidden service set identifier SSID of the available AP, the information about the available AP is information about an available AP that is determined by the platform device according to the first current information and at least one piece of second current information, and the second current information comprises current location information of the AP and the hidden SSID of the AP; and
accessing a wireless local area network WLAN according to the information about the at least one available AP.

9. The method according to claim 8, wherein the information about the available AP further comprises signal strength of the available AP; and
if there are more than two pieces of information about the available AP, the accessing a wireless local area network WLAN according to the information about the at least one available AP comprises:
sorting priorities of more than two available APs according to the signal strength of the available APs, and attempting to access the WLAN starting from the available AP with the highest priority by using the available APs one by one until the access is successful.

10. The method according to claim 8 or 9, wherein the current location information of the terminal device comprises at least one type of the following information: Global Positioning System GPS coordinates, a serving cell identifier, an indoor/outdoor attribute, or a Media Access Control MAC address, an Internet Protocol IP address, and signal strength that are of a found AP; and the first current information further comprises at least one type of the following information: radio interference information, temperature and humidity at a current location, or power supply information.

11. A platform device, comprising:
a receiving module, configured to receive first current information sent by a terminal device, wherein the first current information comprises an access point query request and current location information of the terminal device;
an access point AP determining module, configured to determine, according to the first current information and at least one piece of second current information, an access point AP available to the terminal device, wherein the second current information comprises current location information of the AP and a hidden service set identifier SSID of the AP; and
a sending module, configured to send, to the terminal device, information about the AP available to the terminal device, wherein the information about the available AP comprises the hidden SSID of the AP.

12. The platform device according to claim 11, wherein the AP determining module is specifically configured to: match at least one type of information in the first current information with information that is in the at least one piece of second current information and that is corresponding to the at least one type of information, and determine an AP corresponding to the second current information as the AP available to the terminal device, wherein a matching result of the AP meets a preset available condition.

13. The platform device according to claim 11 or 12, wherein the receiving module is further configured to: before the AP determining module determines, according to the first current information and the at least one piece of second current information, the AP available to the terminal device, receive the second current information sent by the AP; and if it is determined, according to the second current information sent by the AP, that the AP is an unregistered access point, register the AP and save the second current information sent by the AP; or if it is determined, according to the second current information sent by the AP, that the AP is a registered access point, update the locally saved second current information according to the second current information sent by the AP.

14. The platform device according to claim 13, wherein the receiving module is specifically configured to: receive the second current information periodically sent by the AP; or receive the second current information sent by the AP when the second current information changes; or periodically send a second current information obtaining request to the AP, and receive the second current information sent by the AP.

15. The platform device according to any one of claims 11 to 14, wherein the receiving module is specifically configured to: receive the first current information sent by the terminal device, and if the terminal device is an unregistered terminal device, register the terminal device according to the first current information.

16. The platform device according to any one of claims 11 to 15, wherein the current location information of the terminal device comprises at least one type of the following information: Global Positioning System GPS coordinates of the terminal device, a serving cell identifier of the terminal device, an indoor/outdoor attribute of the terminal device, or a Media Access Control MAC address, an Internet Protocol IP address, and signal strength that are of an AP found by the terminal device; and the first current information further comprises at least one type of the following information: radio interference information of the terminal device, temperature and humidity at a current location of the terminal device, or power supply information of the terminal device.

17. The platform device according to any one of claims 11 to 16, wherein the current location information of the AP comprises at least one type of the following information: GPS coordinates of the AP, a serving cell identifier of the AP, an indoor/outdoor attribute of the AP, or a MAC address, an IP address, and signal strength that are of the AP; and the second current information further comprises at least one type of the following information: radio interference information of the AP, temperature and humidity at a current location of the AP, or power supply information of the AP.

18. A terminal device, comprising:
a sending module, configured to send first current information to a platform device, wherein the first current information comprises an access point query request and current location information of the terminal device;
a receiving module, configured to receive information that is about at least one available access point AP and that is sent by the platform device, wherein the information about the available AP comprises a hidden service set identifier SSID of the available AP, the information about the available AP is information about an available AP that is determined by the platform device according to the first current information and at least one piece of second current information, and the second current information comprises current location information of the AP and the hidden SSID of the AP; and
an access module, configured to access a wireless local area network WLAN according to the information about the at least one available AP.

19. The terminal device according to claim 18, wherein the information about the available AP further comprises signal strength of the available AP; and
if there are more than two pieces of information about the available AP, the access module is specifically configured to: sort priorities of more than two available APs according to the signal strength of the available APs, and attempt to access the WLAN starting from the available AP with the highest priority by using the available APs one by one until the access is successful.

20. The terminal device according to claim 18 or 19, wherein the current location information of the terminal device comprises at least one type of the following information: Global Positioning System GPS coordinates, a serving cell identifier, an indoor/outdoor attribute, or a Media Access Control MAC address, an Internet Protocol IP address, and signal strength that are of a found AP; and the first current information further comprises at least one type of the following information: radio interference information, temperature and humidity at a current location, or power supply information.

21. A platform device, comprising:
a receiver, configured to receive first current information sent by a terminal device, wherein the first current information comprises an access point query request and current location information of the terminal device;
a processor, configured to determine, according to the first current information and at least one piece of second current information, an access point AP available to the terminal device, wherein the second current information comprises current location information of the AP and a hidden service set identifier SSID of the AP; and
a transmitter, configured to send, to the terminal device, information about the AP available to the terminal device, wherein the information about the available AP comprises the hidden SSID of the AP.

22. The platform device according to claim 21, wherein the processor is specifically configured to: match at least one type of information in the first current information with information that is in the at least one piece of second current information and that is corresponding to the at least one type of information, and determine an AP corresponding to the second current information as the AP available to the terminal device, wherein a matching result of the AP meets a preset available condition.

23. The platform device according to claim 21 or 22, wherein the receiver is further configured to receive the second current information sent by the AP, and the processor is further configured to: if it is determined, according to the second current information sent by the AP, that the AP is an unregistered access point, register the AP and save the second current information sent by the AP; or if it is determined, according to the second current information sent by the AP, that the AP is a registered access point, update the locally saved second current information according to the second current information sent by the AP.

24. The platform device according to claim 23, wherein the receiver is specifically configured to: receive the second current information periodically sent by the AP; or receive the second current information sent by the AP when the second current information changes; or periodically send a second current information obtaining request to the AP, and receive the second current information sent by the AP.

25. The platform device according to any one of claims 21 to 24, wherein the receiver is specifically configured to: receive the first current information sent by the terminal device, and if the terminal device is an unregistered terminal device, register the terminal device according to the first current information.

26. The platform device according to any one of claims 21 to 25, wherein the current location information of the terminal device comprises at least one type of the following information: Global Positioning System GPS coordinates of the terminal device, a serving cell identifier of the terminal device, an indoor/outdoor attribute of the terminal device, or a Media Access Control MAC address, an Internet Protocol IP address, and signal strength that are of an AP found by the terminal device; and the first current information further comprises at least one type of the following information: radio interference information of the terminal device, temperature and humidity at a current location of the terminal device, or power supply information of the terminal device.

27. The platform device according to any one of claims 21 to 26, wherein the current location information of the AP comprises at least one type of the following information: GPS coordinates of the AP, a serving cell identifier of the AP, an indoor/outdoor attribute of the AP, or a MAC address, an IP address, and signal strength that are of the AP; and the second current information further comprises at least one type of the following information: radio interference information of the AP, temperature and humidity at a current location of the AP, or power supply information of the AP.

28. A terminal device, comprising:
a transmitter, configured to send first current information to a platform device, wherein the first current information comprises an access point query request and current location information of the terminal device;
a receiver, configured to receive information that is about at least one available access point AP and that is sent by the platform device, wherein the information about the available AP comprises a hidden service set identifier SSID of the available AP, the information about the available AP is information about an available AP that is determined by the platform device according to the first current information and at least one piece of second current information, and the second current information comprises current location information of the AP and the hidden SSID of the AP; and
a processor, configured to access a wireless local area network WLAN according to the information about the at least one available AP.

29. The terminal device according to claim 28, wherein the information about the available AP further comprises signal strength of the available AP; and
if there are more than two pieces of information about the available AP, the processor is specifically configured to: sort priorities of more than two available APs according to the signal strength of the available APs, and attempt to access the WLAN starting from the available AP with the highest priority by using the available APs one by one until the access is successful.

30. The terminal device according to claim 28 or 29, wherein the current location information of the terminal device comprises at least one type of the following information: Global Positioning System GPS coordinates, a serving cell identifier, an indoor/outdoor attribute, or a Media Access Control MAC address, an Internet Protocol IP address, and signal strength that are of a found AP; and the first current information further comprises at least one type of the following information: radio interference information, temperature and humidity at a current location, or power supply information.
